# EUROPEAN PATENT SPECIFICATION

(11) **EP 3 130 783 B1**
(45) Date of publication and mention of the grant of the patent: **25.05.2022**
(21) Application number: 16183972.5
(22) Date of filing: 12.08.2016
(51) Int. Cl.: F02C 7/32, F02C 9/56

(54) **GAS TURBINE ENGINE STALL MARGIN MANAGEMENT**
GASTURBINENMOTOR, REGULIERUNG DES PUMPABSTANDES
MOTEUR À TURBINE À GAZ, GESTION DE MARGE DE POMPAGE

(30) Priority: 14.08.2015 US 201514826482
(43) Date of publication of application: 15.02.2017
(73) Proprietor: General Electric Company, Schenectady, NY 12345 (US)
(72) Inventor: GEMIN, Paul Robert, Cincinnati, OH Ohio 45215 (US); ADIBHATLA, Sridhar, Cincinnati, OH Ohio 45215 (US); RADUN, Arthur Vorwerk, Dayton, OH Ohio 45409 (US); LEAMY, Kevin Richard, Cincinnati, OH Ohio 45215 (US)
(74) Representative: Openshaw & Co.

(56) References cited:
- EP-A2- 1 947 311
- EP-A2- 2 657 457
- EP-A2- 2 728 141
- US-A1- 2006 042 252
- US-A1- 2014 245 748
- Christian Zähringer ET AL: "Towards the Powerhouse for More Electric Aircraft - Dedicated Engine Concepts", XIX International Symposium on Air Breathing Engines 2009 : (ISABE 2009) ; Montreal, Canada, 7 - 11 September, 2009, vol. 1, 31 December 2009 (2009-12-31), - 11 September 2009 (2009-09-11), pages 555-561, XP055100445, Canada ISBN: 978-1-61567-606-4

## Description

### FIELD

The present subject matter relates generally to a power system for a gas turbine engine and a method for operating the same.

### BACKGROUND

A gas turbine engine generally includes a fan and a core arranged in flow communication with one another. Additionally, the core of certain gas turbine engines can include, in serial flow order, a compressor section (including a low pressure (LP) compressor and a high pressure (HP) compressor), a combustion section, a turbine section (including a high pressure (HP) turbine and a low pressure (LP) turbine), and an exhaust section. In operation, air from the fan is progressively compressed by the LP compressor and HP compressor until the air reaches the combustion section. Fuel is mixed with the compressed air and burned within the combustion section to provide combustion gases. The combustion gases are routed from the combustion section through the HP turbine and the LP turbine, and subsequently routed through the exhaust section, e.g., to atmosphere. The flow of combustion gasses through the HP turbine and LP turbine drives the HP turbine and LP turbine, respectively.

The HP turbine can be mechanically coupled to the HP compressor through a high pressure (HP) shaft, such that rotation of the HP turbine correspondingly rotates the HP compressor. Similarly, the LP turbine can be mechanically coupled to the LP compressor through a low pressure (LP) shaft, such that rotation of the LP turbine correspondingly rotates the LP compressor. Accordingly, the HP turbine can drive the HP compressor and the LP turbine can drive the LP compressor.

Additionally, rotation of the HP turbine can also drive various accessory systems of the gas turbine engine and/or an aircraft including the gas turbine engine. For example, the HP shaft in certain gas turbine engines drives an accessory gear box, which is mechanically coupled to a starter-electric generator. The starter-electrical generator extracts mechanical work from the HP shaft and transforms such work into electrical power for systems such as an environmental controls system of the aircraft including the gas turbine engine.

In order to ensure a stable air flow through the gas turbine engine and protect the gas turbine engine from stalling, the gas turbine engine is designed to operate within a stall margin calculated assuming a relatively high power extraction from the gas turbine engine using the starter-electric generator. However, such may result in, e.g., a relatively slow acceleration of the gas turbine engine and/or a decreased maximum available thrust production. Accordingly, a method for operating the gas turbine engine to improve a performance of the gas turbine engine despite a desired amount of electrical power to be generated from the starter-electric generator of the gas turbine engine would be particularly beneficial.

EP 2657457 discloses an electricity generation system comprising a power control device which manipulates first and second power regulation devices to ensure a specified amount or greater of jet engine surge margin. US 2006/042252 discloses an engine power extraction control system which controls the main propulsion engines and the electrical machines that are coupled thereto to supply an appropriate amount of aircraft thrust and electrical energy to the aircraft. EP 2728141 discloses a multi-spool gas turbine engine. Christian Zahringer et al: "Towards the Powerhouse for More Electric Aircraft - Deducated Engine Concepts", XIX International Symposium on Air Breathing Engines 2009: (ISABE 2009); Montreal, Cananda, 7-11 September 2009, vol. 1, 31 December 2009, pages 555-561 disclose an on-board power-supply system for an aircraft. US2014/245748 A1 discloses a gas turbine engine optimization by electric power transfer.

### BRIEF DESCRIPTION

In an aspect of the invention, there is provided a method for operating a multi-shaft aeronautical gas turbine engine according to claim 1. In another aspect of the invention, there is provided a multi-shaft aeronautical gas turbine engine according to claim 5.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of an exemplary gas turbine engine according to various embodiments of the present subject matter.
FIG. 2 is a simplified, schematic view of the exemplary gas turbine engine of FIG. 1 including aspects of a power management system in accordance with an exemplary embodiment of the present disclosure.
FIG. 3 is a graph depicting a stall line and an operation line for the exemplary gas turbine engine of FIG. 2 while extracting a relatively high amount of electrical power from the exemplary gas turbine engine.
FIG. 4 is a graph depicting a stall line and an operation line for the exemplary gas turbine engine of FIG. 2 while extracting little or no electrical power from the exemplary gas turbine engine.
FIG. 5 is a flow diagram of a method for controlling a gas turbine engine in accordance with an exemplary aspect of the present disclosure but not covered by the claimed invention.
FIG. 6 a flow diagram of a method for controlling a gas turbine engine in accordance with another exemplary aspect of the present disclosure.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. Aspects of the present disclosure provide for a system (and method of operating the same) for a gas turbine engine that manages one or more loads on a starter-electric generator of the gas turbine engine to ensure a desired engine performance is met (e.g., to ensure a desired amount of thrust is generated, to ensure the desired amount of thrust is generated more quickly, and/or to ensure a certain stall margin is maintained). For example, in certain exemplary embodiments, the system may subordinate providing power to one or more electrical systems of the gas turbine engine in order to ensure a certain engine performance is met. Specifically, the system may manage one or more electrical loads such that the one or more electrical loads draw less than a desired amount of electrical power from the starter-electric generator to provide for the meeting of the desired engine performance.

Additionally, in certain embodiments, the system may additionally include an auxiliary power supply (e.g., in the form of an energy storage device or auxiliary generator) that supplements the reduction in power generation drawn from the starter-electric generator. The loads and auxiliary power supply may be controlled such that a desired amount of electrical power is provided to the loads (by drawing a portion of such desired amount of electrical power from each of the starter-electric generator and the auxiliary power supply), or such that less than the desired amount of electrical power is provided to the loads. Regardless, however, the system ensures desired engine performance is met.

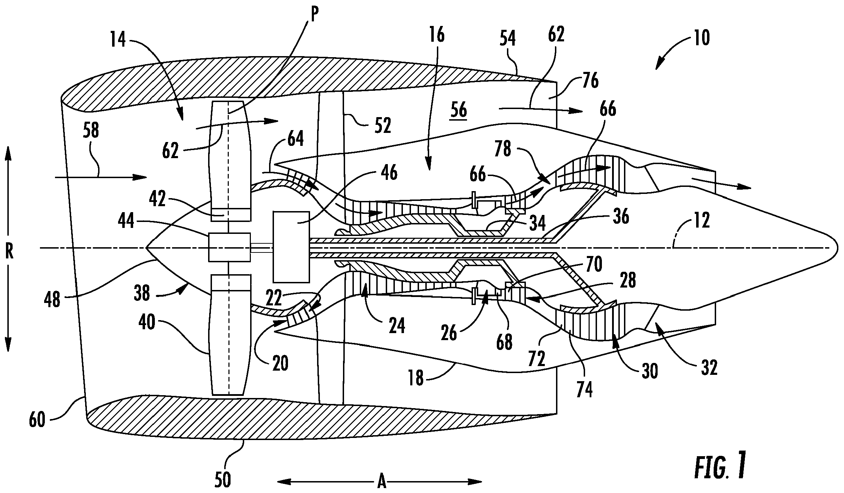

Referring now to the drawings, wherein identical numerals indicate the same elements throughout the figures, FIG. 1 is a schematic cross-sectional view of a gas turbine engine in accordance with an exemplary embodiment of the present disclosure. More particularly, for the embodiment of FIG. 1, the gas turbine engine is a high-bypass turbofan jet engine 10, referred to herein as "turbofan engine 10." As shown in FIG. 1, the turbofan engine 10 defines an axial direction A (extending parallel to a longitudinal centerline 12 provided for reference) and a radial direction R. In general, the turbofan 10 includes a fan section 14 and a core turbine engine 16 disposed downstream from the fan section 14.

The exemplary core turbine engine 16 depicted generally includes a substantially tubular outer casing 18 that defines an annular inlet 20. The outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22.

For the embodiment depicted, the fan section 14 includes a variable pitch fan 38 having a plurality of fan blades 40 coupled to a disk 42 in a spaced apart manner. As depicted, the fan blades 40 extend outwardly from disk 42 generally along the radial direction R. Each fan blade 40 is rotatable relative to the disk 42 about a pitch axis P by virtue of the fan blades 40 being operatively coupled to a suitable actuation member 44 configured to collectively vary the pitch of the fan blades 40 in unison. The fan blades 40, disk 42, and actuation member 44 are together rotatable about the longitudinal axis 12 by LP shaft 36 across a power gear box 46. The power gear box 46 includes a plurality of gears for stepping down the rotational speed of the LP shaft 36 to a more efficient rotational fan speed.

Referring still to the exemplary embodiment of FIG. 1, the disk 42 is covered by rotatable front hub 48 aerodynamically contoured to promote an airflow through the plurality of fan blades 40. Additionally, the exemplary fan section 14 includes an annular fan casing or outer nacelle 50 that circumferentially surrounds the fan 38 and/or at least a portion of the core turbine engine 16. It should be appreciated that the nacelle 50 may be configured to be supported relative to the core turbine engine 16 by a plurality of circumferentially-spaced outlet guide vanes 52. Moreover, a downstream section 54 of the nacelle 50 may extend over an outer portion of the core turbine engine 16 so as to define a bypass airflow passage 56 therebetween.

During operation of the turbofan engine 10, a volume of air 58 enters the turbofan 10 through an associated inlet 60 of the nacelle 50 and/or fan section 14. As the volume of air 58 passes across the fan blades 40, a first portion of the air 58 as indicated by arrows 62 is directed or routed into the bypass airflow passage 56 and a second portion of the air 58 as indicated by arrow 64 is directed or routed into the LP compressor 22. The ratio between the first portion of air 62 and the second portion of air 64 is commonly known as a bypass ratio. The pressure of the second portion of air 64 is then increased as it is routed through the high pressure (HP) compressor 24 and into the combustion section 26, where it is mixed with fuel and burned to provide combustion gases 66.

The combustion gases 66 are routed through the HP turbine 28 where a portion of thermal and/or kinetic energy from the combustion gases 66 is extracted via sequential stages of HP turbine stator vanes 68 that are coupled to the outer casing 18 and HP turbine rotor blades 70 that are coupled to the HP shaft or spool 34, thus causing the HP shaft or spool 34 to rotate, thereby supporting operation of the HP compressor 24. The combustion gases 66 are then routed through the LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, thus causing the LP shaft or spool 36 to rotate, thereby supporting operation of the LP compressor 22 and/or rotation of the fan 38.

The combustion gases 66 are subsequently routed through the jet exhaust nozzle section 32 of the core turbine engine 16 to provide propulsive thrust. Simultaneously, the pressure of the first portion of air 62 is substantially increased as the first portion of air 62 is routed through the bypass airflow passage 56 before it is exhausted from a fan nozzle exhaust section 76 of the turbofan 10, also providing propulsive thrust. The HP turbine 28, the LP turbine 30, and the jet exhaust nozzle section 32 at least partially define a hot gas path 78 for routing the combustion gases 66 through the core turbine engine 16.

It should be appreciated, however, that the exemplary turbofan engine 10 depicted in FIG. 1 is by way of example only, and that in other exemplary embodiments, the turbofan engine 10 may be any other suitable gas turbine engine, such as one or more of the following aeronautical gas turbine engines: a turboprop engine, turbojet engine, turboshaft engine, etc.

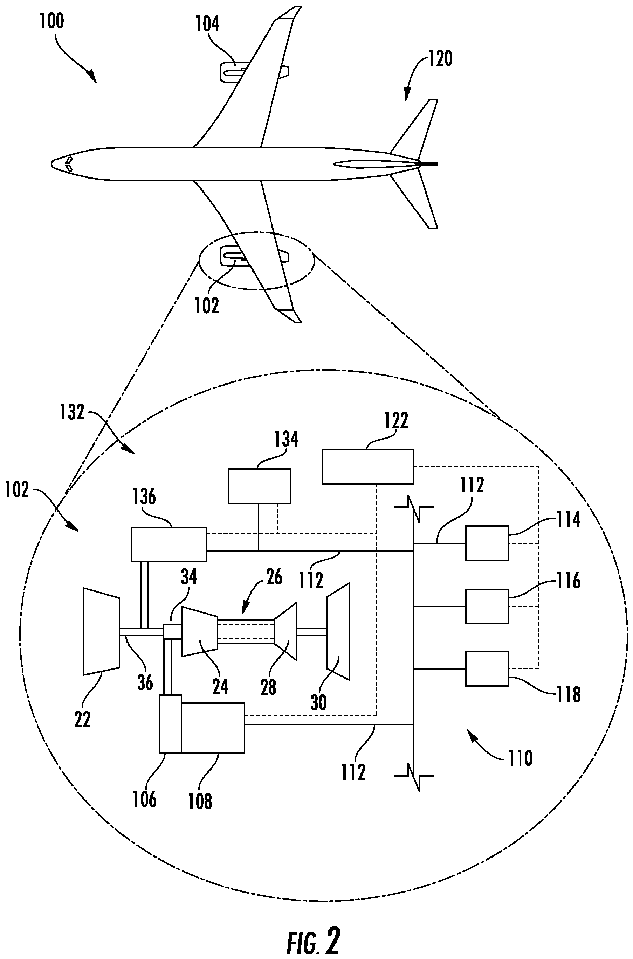

Referring now to FIG. 2, a simplified, schematic view is provided of an aircraft 100 including a pair of turbofan engines in accordance with various aspects of the present disclosure. Specifically, the exemplary aircraft 100 depicted includes a first turbofan engine 102 and a second turbofan engine 104. It should be appreciated, however, that the exemplary aircraft 100 depicted is provided by way of example only and that in other exemplary embodiments, the aircraft 100 may include any other suitable number and/or configuration of engines.

Additionally, the first and/or second turbofan engines 102, 104 may each be configured in substantially the same manner as the exemplary turbofan engine 10 of FIG. 1. Accordingly, the same or similar numbering of components may refer to the same or similar parts. For example, as shown in the close-up, simplified, schematic view of the first turbofan engine 102 in FIG. 2, the exemplary first turbofan engine 102 includes a compressor section (including an LP compressor 22 and an HP compressor 24), a combustion section 26, and a turbine section (including an HP turbine 28 and an LP turbine 30). The HP compressor 24 is mechanically coupled to the HP turbine 28 via an HP shaft 34 (depicted in phantom through the combustion section 26), and the LP compressor 22 is mechanically coupled to the LP turbine 30 via an LP shaft 36. The exemplary first turbofan engine 102 may additionally include other aspects similar to the exemplary turbofan engine 10 described above with reference to FIG. 1

Moreover, the first turbofan engine 102 includes an electrical machine mechanically coupled to the HP shaft 34. More particularly, the first turbofan engine 102 includes an accessory gear box 106 mechanically coupled to the HP shaft 34, with the electrical machine mechanically coupled to the accessory gear box 106. The electrical machine, for the embodiment depicted, is a main starter-electric generator 108. The starter-electric generator 108 may be configured to start the turbofan engine 102 by transforming electrical power to mechanical work, and applying such mechanical work to the HP shaft 34 through the accessory gear box 106. For example, the starter-electric generator 108 may rotate the HP shaft 34 until certain components of the turbofan engine 102 are rotating at start speeds. Once such components of the turbofan engine 102 are rotating at start speeds, fuel may be provided to the combustion section 26, and the combustion of such fuel in the combustion section 26 - generating combustion gases - may take over driving the turbofan engine 102.

By contrast, however, during operation of the turbofan engine 102, the starter-electric generator 108 may transform mechanical work from the HP shaft 34 to electrical power. The electrical power extracted from the HP shaft 34 of the turbofan engine 102 and generated by the starter-electric generator 108 may then be used to power certain components of the turbofan engine 102 and/or the aircraft 100. For example, the exemplary main starter-electric generator 108 is configured for electrical communication with a power distribution bus 110 of the turbofan engine 102 and/or of the aircraft 100. Specifically, for the embodiment depicted in FIG. 2, the main starter-electric generator 108 is in electrical communication with the power distribution bus 110 via one or more electrical lines 112.

The power distribution bus 110 may distribute electrical power from one or more power sources to the various systems of the turbofan engine 102 and/or the aircraft 100. For the embodiment of FIG. 2, the power distribution bus 110 is in electrical communication with a first load 114 and a second load 116. The first load 114 may be, e.g., an environmental control system of the aircraft 100. The environmental control system may regulate an internal temperature and pressure of a cabin of the aircraft 100. Additionally, the second load 116 may be one or more electrical systems of the turbofan engine 102 and/or the aircraft 100. It should be appreciated, of course, that in other exemplary embodiments any other suitable loads may additionally or alternatively be in electrical communication with the power distribution bus 110.

Further, an auxiliary power unit 118 is also provided in electrical communication with the power distribution bus 110. The auxiliary power unit 118 may include an electric generator and a dedicated turbine engine, each located at an aft end 120 of the aircraft 100. The electric generator may be driven by the dedicated turbine engine to produce electrical power. The auxiliary power unit 118 may provide such electrical power to the power distribution bus 110 when, for example, the turbofan engine 102 is not operating. For example, the auxiliary power unit 118 may provide electrical power to the power distribution bus 110 when the aircraft 100 is parked, or in the event of a failure of the turbofan engine 102 during flight of the aircraft 100. In at least certain exemplary embodiments, the auxiliary power unit 118 may provide electrical power through the power distribution bus 110 to the starter-electric generator 108 during startup such that the starter-electric generator 108 may start the turbofan engine 102 in the manner described above.

As will be discussed in greater detail below, the turbofan engine 102 is configured to integrate engine control and electrical power generation. Specifically, the turbofan engine 102 includes a controller 122 operably connected to the starter-electric generator 108 as well as to the various loads on the power distribution bus 110. The controller 122 may be a controller dedicated to the turbofan engine 102, or alternatively may be integrated into a main controller for the aircraft 100. Generally, the controller 122 may include any computing system having one or more processor(s) and associated memory device(s) configured to perform a variety of computer-implemented functions to control the turbofan engine 10. It should be appreciated, that as used herein, the term "processor" may refer to a controller, a microcontroller, a microcomputer, a programmable logic controller (PLC), an application specific integrated circuit, and other programmable circuits. Additionally, the memory device(s) may generally comprise memory element(s) including, but not limited to, computer readable medium (e.g., random access memory (RAM)), computer readable non-volatile medium (e.g., a flash memory), a compact disc-read only memory (CD-ROM), a magneto-optical disk (MOD), a digital versatile disc (DVD), and/or other suitable memory elements. The memory devices may include software or other control instructions that, when executed by the processor, performs desired functions.

For the embodiment depicted, the controller 122 is configured to, e.g., determine a desired amount of thrust to be produced from the turbofan engine 102 as well as a desired amount of electrical power to be drawn from the turbofan engine 102, or more particularly from the starter-electric generator 108 of the turbofan engine 102. In light of these determinations, the controller 122 is configured to operate the turbofan engine 102 in order to achieve the desired amount of thrust, and/or in order to achieve the desired amount of thrust production more quickly. With such a mode of operation, the controller 122 may be configured to reduce an amount of electrical power drawn from the starter-electric generator 108 to an amount below the desired amount in order to facilitate such thrust production from the turbofan engine 102. For example, in certain exemplary embodiments, the controller 122 may be configured to reduce an amount of electrical power drawn from the starter-electric generator 108 by reducing a load power draw by shutting down or scaling back use of certain electrical systems, e.g., loads 114, 116. Notably, in certain exemplary embodiments, the controller 122 may be configured to reduce an amount of electrical power drawn from the starter-electric generator 108 by at least about ten percent (10%) of the desired amount to facilitate the thrust production from the turbofan engine 102. Alternatively, however, in other exemplary embodiments, the controller 122 may be configured to reduce an amount of electrical power drawn from the starter-electric generator 108 by at least about fifteen percent (15 %) of the desired amount, at least about twenty percent (20 %) of the desired amount, at least about thirty percent (30 %) of the desired amount, at least about fifty percent (50 %) of the desired amount, or at least about seventy-five percent (75 %) of the desired amount. The maximum amount of reduction in the electrical power drawn from the starter-electric generator 108 may be a function of a minimum amount of electrical power required to run certain critical electronic components of the turbofan engine 102 and/or the aircraft 100.

Accordingly, the controller 122 of the turbofan engine 102, at least in certain exemplary aspects, determines a thrust requirement and subordinates electrical power generation needs to ensure such thrust requirement is met, or met more quickly.

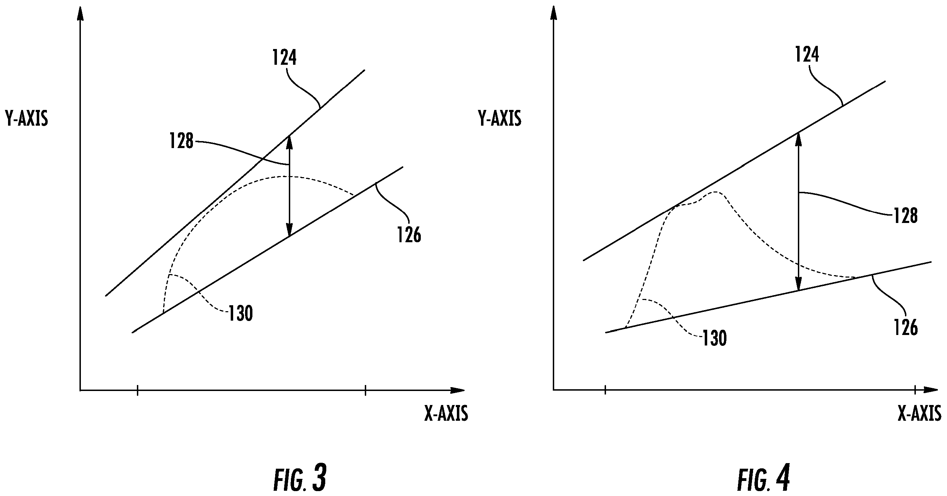

With reference now also to FIGS. 3 and 4, a stall line 124 for the exemplary turbofan engine 102 is depicted graphically. Specifically, FIG. 3 depicts the stall line 124 for the exemplary turbofan engine 102 as well as an operation line 126 for the turbofan engine 102 while the turbofan engine 102 is extracting a relatively high amount of electrical power using the starter-electric generator 108. By contrast, FIG. 4 depicts the stall line 124 for the exemplary turbofan engine 102 along with an operation line 126 for the turbofan engine 102 while the turbofan engine 102 is extracting little or no electrical power using the starter-electric generator 108.

For FIGS. 3 and 4, the stall line 124 is defined as a maximum ratio of a compressor pressure ratio (y-axis) to a compressor mass flow rate (x-axis) that will consistently allow for stable airflow through the turbofan engine 102. The compressor pressure ratio is generally defined as a ratio of a stagnation pressure at a forward end (i.e., an upstream end) of the compressor section to a pressure at an aft end (i.e., a downstream end) of the compressor section. Additionally, the compressor mass flow rate is generally defined as a mass of the air flowing through the compressor section per unit of time. Further, the operation line 126 indicates the ratio of the compressor pressure ratio to the compressor mass flow rate for the turbofan engine 102 during steady state operation of the turbofan engine 102 for a variety of compressor speeds.

If the ratio of the compressor pressure ratio to compressor mass flow rate exceeds the stall line 124, it is more likely that the compressor will stall or surge. Accordingly, in order to ensure stable airflow through the turbofan engine 102, the turbofan engine 102 is designed and/or operated such that the operation line 126 falls below the stall line 124. Defined between the operation line 126 of the turbofan engine 102 and the stall line 124 of the turbofan engine 102 is the stall margin 128. As shown, the stall margin 128 is increased when an amount of power extracted from the turbofan engine 102 through the starter-electric generator 108 is reduced. For example, the stall margin 128 is greater in FIG. 4 wherein little or no electrical power is being extracted from the turbofan engine 102 through the starter-electric generator 108, as compared to the stall margin 128 in FIG. 3, wherein a relatively high amount of electrical power is being extracted from the turbofan engine 102 through the starter-electric generator 108.

Moreover, when the turbofan engine 102 is operated in transient conditions, e.g., when a core speed of the turbofan engine 102 is increased or decreased, the ratio of the compressor pressure ratio to compressor mass flow rate can vary from the operation line 126 of the turbofan engine 102. The core speed of the turbofan engine 102 may refer to a rotational speed of the HP shaft 34. As the core speed of the turbofan engine 102 increases, a velocity and/or mass flow rate of the combustion gasses through the turbine section and nozzle 32 (see FIG. 1) can also increase, which can produce more thrust.

Accordingly, aspects of the present disclosure may reduce an amount of electrical power extracted from the turbofan engine 102 through the starter-electric generator 108 to increase the stall margin 128 for the turbofan engine 102 and allow for greater variations from the operation line 126 during such transient engine conditions. A turbofan engine 102 operated in such a manner may thus be capable of, e.g., increasing its core speed more quickly (i.e., accelerating), and/or operating more closely to the stall line if this provides benefits such as an engine efficiency or other benefits related to engine design. For example, FIG. 3 depicts a transient operation line 130 (in phantom) for the turbofan engine 102 while a desired amount of electrical power is extracted from the turbofan engine 102, and FIG. 4 depicts a transient operation line 130 (in phantom) for the turbofan engine 102 while less than a desired amount of electrical power is extracted from the turbofan engine 102. The increased stall margin 128 resulting from a decrease in the amount of electrical power extracted from the turbofan engine 102, as depicted in FIG. 4, allows for the turbofan engine 102 to achieve increased core speeds more quickly, and thus to produce an increased amount of thrust more quickly. For example, with the increased stall margin 128, the turbofan engine 102 may increase its compressor pressure ratio more quickly than is allowed with the standard stall margin 128.

Referring back to FIG. 2, the exemplary turbofan engine 102 depicted includes additional elements to provide auxiliary power when, e.g., the controller 122 reduces an amount of electrical power extracted from the turbofan engine 102 through the starter-electric generator 108. More specifically, the exemplary turbofan engine 102 further includes an auxiliary power supply 132 also configured for electrical communication with the power distribution bus 110. The auxiliary power supply 132 may be configured to provide electrical power to the power distribution bus 110 in order to reduce the amount of power generated by and drawn from the starter-electric generator 108 to facilitate a desired amount of thrust production by the turbofan engine 102.

For the embodiment depicted, the auxiliary power supply 132 includes an energy storage device, which for the embodiment depicted is configured as a battery pack 134, configured for electrical communication with the power distribution bus 110 and an auxiliary electric generator 136 also configured for electrical communication with the power distribution bus 110. For the embodiment depicted, the auxiliary power supply 132, including the battery pack 134 and auxiliary electric generator 136, is in electrical communication with power distribution bus 110 via the one or more electrical lines 112.

The battery pack 134 may be any suitable battery pack 134 sufficient for carrying an electrical load of the aircraft 100 and/or turbofan engine 102. For example, the battery pack 134 may be configured to provide electrical power at a rate of at least about 150 kW, at least about 200 kW, at least about 250 kW, at least about 300 kW, or at least about 350 kW. Additionally, the battery pack 134 may be configured to provide such electrical power for at least about ten seconds, at least about thirty seconds, at least about two minutes, at least about five minutes, or at least about ten minutes. In other exemplary embodiments, however, the battery pack 134 may be configured to provide electrical power at any other suitable rate for any other suitable time period. Additionally, the battery pack 134 may incorporate any suitable battery technology. For example, the battery pack 134 may include one or more of the following chemistries: lithium iron phosphate, lithium ion, alkaline, or zinc-based. It should be appreciated, that as used herein, terms of approximation, such as "about" or "approximately," refer to being within a ten percent (10%) margin of error.

As depicted, the battery pack 134 is in operable communication with the controller 122. In certain embodiments, the controller 122 may be configured to operate the battery pack 134 to provide electrical power from the battery pack 134 to the power distribution bus 110 when the amount of electrical power drawn from the starter-electric generator 108 must be reduced to an amount below a desired amount to facilitate, e.g., thrust production by the turbofan engine 102. For example, the controller 122 may be configured to operate the battery pack 134 to provide electrical power from the battery pack 134 to the power distribution bus 110 when the turbofan engine 102 is operated under certain transient engine conditions.

As previously stated, the exemplary auxiliary power supply 132 also includes the auxiliary electric generator 136. The auxiliary electric generator 136 is driven by the one or more shafts of the turbofan engine 102. More particularly, for the embodiment depicted, the auxiliary electric generator 136 is driven by the LP shaft 36 of the turbofan engine 102. Accordingly, for the embodiment depicted the turbofan engine 102 includes the main starter-electric generator 108 mechanically coupled to and driven by the HP shaft 34 and the auxiliary electric generator 136 mechanically coupled to and driven by the LP shaft 36.

The auxiliary electric generator 136 is operably connected to the controller 122. The controller 122 may additionally, or alternatively, be configured to operate the auxiliary electric generator 136 to provide power from the auxiliary electric generator 136 to the power distribution bus 110 when the turbofan engine 102 is operated under transient engine conditions. Particularly, the controller 122 may be configured to operate the auxiliary electric generator 136 to provide power from the auxiliary electric generator 136 to the power distribution bus 110 when an amount of power extracted from the HP shaft 34 using the starter-electric generator 108 is reduced to accommodate a desired amount of thrust production from the turbofan engine 102.

Additionally, or alternatively, in certain exemplary aspects the controller 122 may be configured to provide power from the auxiliary electric generator 136, through the power distribution bus 110, through the starter-electric generator 108, and back to the core 16 of the turbofan engine 102. More particularly, the controller 122 may be configured to provide power from the auxiliary electric generator 136, through the power distribution bus 110 and starter-electric generator 108 to the HP shaft 34. For example, the controller 122 may be configured to provide power in such a manner to the HP shaft 34 during low-speed idle engine conditions. When the aircraft 100 is descending, for example, it may be beneficial to operate the turbofan engine 102 at a relatively low core speed (e.g., at an idle speed), such that little or no thrust is produced by the turbofan engine 102. In order to further reduce the compressor mass flow rate (and thus reduce an amount of thrust provided), the amount of electrical power extracted by the starter-electric generator 108 may need to be minimized to increase the stall margin 128 (see FIG. 4). The auxiliary electric generator 136 may thus be used to make up the deficit of electrical power production. Further, if the auxiliary electric generator 136 includes additional electrical power generation capacity on top of the deficit, such additional electric power may be provided, in the manner described above, through the power distribution bus 110 and starter-electric generator 108 back to the HP shaft 34 of the turbofan engine 102. Such may allow for less fuel usage and thus greater efficiency for the turbofan engine 102.

It should be appreciated, however, that the exemplary embodiment described above with reference to FIG. 2 is provided by way of example only. For example, in certain exemplary embodiments, the turbofan engine 102 may not include one or more aspects of the auxiliary power supply 132 described herein. For example in certain embodiments, the turbofan engine 102 may not include at least one of the battery system 134 or the auxiliary electric generator 136. Further, in still other embodiments, the turbofan engine 102 may not include the auxiliary power supply 132 altogether.

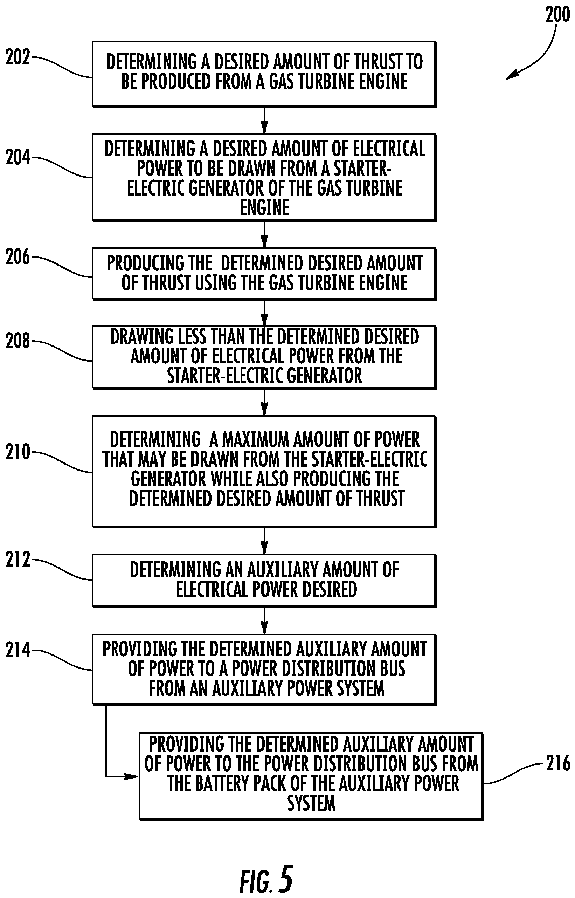

Referring now to FIG. 5, a flow diagram is provided of a method (200) for operating a multi-shaft gas turbine engine. In certain exemplary aspects, the multi-shaft gas turbine engine may be the first turbofan engine 102 incorporated into the aircraft 100 described above with reference to FIG. 2. Accordingly, in certain exemplary aspects, the gas turbine engine may include an electrical machine, and the electrical machine may be a starter-electric generator driven by a high pressure shaft of the gas turbine engine.

As depicted, the exemplary method (200) includes at (202) determining a desired amount of thrust to be produced from the gas turbine engine. Such a determination at (202) may be made by a controller of the gas turbine engine and/or the aircraft in response to, e.g., a user input. For example, the user may increase a throttle of the aircraft indicating to the controller that an increased thrust production is desired from the gas turbine engine.

The exemplary method (200) additionally includes at (204) determining a desired amount of electrical power to be drawn from the starter-electric generator of the gas turbine engine. For example, determining at (204) the desired amount of electrical power to be drawn from the starter-electric generator of the gas turbine engine may include determining an amount of electrical power required to be drawn from the starter-electric generator in order to operate one or more loads in electrical communication with a power distribution bus of the gas turbine engine and/or the aircraft. For example, the determination made at (204) may include determining an amount of power required to be drawn from the starter-electric generator in order to fully operate an environmental controls system of the aircraft and various other electrical systems of the gas turbine engine and/or aircraft.

Referring still to FIG. 5, the exemplary method (200) additionally includes at (206) producing the desired amount of thrust determined at (202) using the gas turbine engine and at (208) drawing less than the desired amount of electrical power determined at (204) from the starter-electric generator. Notably, for the exemplary method (200) of FIG. 5, drawing less than the desired amount of electrical power at (208) allows the gas turbine engine to produce the desired amount of thrust at (206), to produce the desired amount of thrust at (206) more quickly, or to maintain a stall margin for any purpose (such as to increase an efficiency of the engine or to allow for certain engine designs). For example, drawing less than the desired amount of electrical power at (208) may include in certain exemplary aspects drawing less than the amount of power from the starter-electric generator required to fully operate the environmental controls system and/or the various other electrical systems of the gas turbine engine and aircraft.

Accordingly, for the exemplary method (200) of FIG. 5, the gas turbine engine determines a thrust requirement and subordinates any electrical power generation needs to ensure such thrust requirement may be met, or may be met more quickly. As discussed above with reference to FIGS. 3 and 4, the ability to produce the desired amount of thrust, or to produce the desired amount of thrust more quickly, is due to an increased stall margin resulting from the reduction in the electrical power drawn from (and thus produced by) the starter-electric generator by extracting energy from the HP shaft.

Notably, however, for the exemplary aspect depicted in FIG. 5, the method (200) includes elements for supplementing the reduction in electrical power drawn from the starter-electric generator of the gas turbine engine. More specifically, the exemplary method (200) additionally includes at (210) determining a maximum amount of power that may be drawn from the starter-electric generator while also producing the desired amount of thrust at (206) within a desired amount of time or while maintaining a determined stall margin. From the determination made at (210), the exemplary method (200) includes determining at (212) an auxiliary amount of electrical power desired. Specifically, the method (200) includes at (212) determining an auxiliary amount of electrical power desired by subtracting the determined maximum amount of power at (210) that may be drawn from the starter-electric generator from the determined desired amount of electrical power to be drawn at (204).

Referring still to FIG. 5, the exemplary method also includes at (214) providing the auxiliary amount of power determined at (212) to a power distribution bus from an auxiliary power system. The power distribution bus may be a power distribution bus of the aircraft and/or of the gas turbine engine. Accordingly, the starter-electric generator of the gas turbine engine may also be in electrical communication with the power distribution bus. For the exemplary aspect depicted, the auxiliary power system includes a battery pack, and providing at (214) the auxiliary amount of power determined at (212) to the power distribution bus includes at (216) providing the determined auxiliary amount of power to the power distribution bus from the battery pack of the auxiliary power system.

Notably, in certain exemplary aspects, the method (200) may operate during transient engine conditions of the gas turbine engine. Additionally, reducing the amount of power drawn from the starter-electric generator of the gas turbine engine, and instead providing such power from the battery pack of the auxiliary power system, allows for an increased stall margin between the stall line of the gas turbine engine and the operating line of the gas turbine engine. Accordingly, such a reduction in power extracted from the gas turbine engine using the starter-electric generator may better accommodate the transient engine conditions and allow for, e.g., increased acceleration of the gas turbine engine, and/or a higher maximum amount of thrust to be provided, and/or maintenance of a desired stall margin.

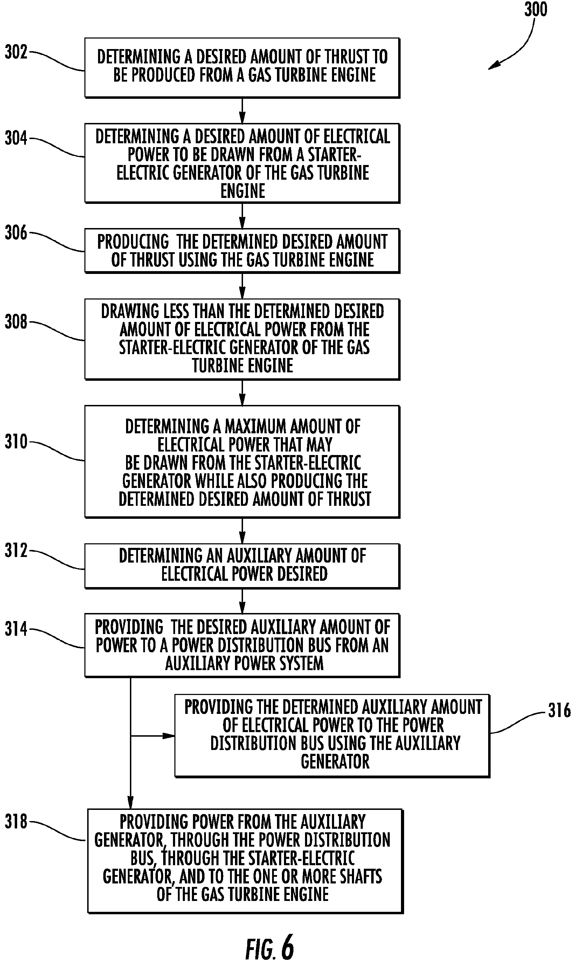

Referring now to FIG. 6, a method for operating a multishaft gas turbine engine in accordance with another exemplary aspect of the present disclosure is provided. The exemplary method (300) may be similar to the exemplary method (200) described above with reference to FIG. 5. For example, the exemplary method (300) may include at (302) determining a desired amount of thrust to be produced from the gas turbine engine, and at (304) determining a desired amount of electrical power to be drawn from the electric generator of the gas turbine engine. Additionally, the exemplary method (300) includes at (306) producing the desired amount of thrust determined at (302) using the gas turbine engine and at (308) drawing less than the desired amount of electrical power determined at (304) using the starter-electric generator of the gas turbine engine to allow the gas turbine engine to produce the desired amount of thrust, or to produce the desired amount of thrust more quickly, or to maintain a stall margin for any purpose (such as to increase an efficiency of the engine or to allow for certain engine designs).

Notably, however, as with the method (200) depicted in FIG. 5, the method (300) includes elements for supplementing the reduction in electrical power drawn from (and thus produced by) the starter-electric generator of the gas turbine engine. Specifically, the exemplary method (300) additionally includes at (310) determining a maximum amount of electrical power that drawn from the starter-electric generator while also producing the desired amount of thrust determined at (302). At (312) the exemplary method (300) includes determining an auxiliary amount of electrical power desired based on the determined desired amount of electrical power to be drawn at (304) and the determined maximum amount of power that may be drawn while also producing the desired amount of thrust using the gas turbine engine at (310). Referring still to FIG. 6, the exemplary method (300) also includes at (314) providing the determined auxiliary amount of power to a power distribution bus from an auxiliary power system. As with the exemplary method (200) of FIG. 5, the power distribution bus may be a power distribution bus of the gas turbine engine and/or of the aircraft including the gas turbine engine. Accordingly, the starter-electric generator of the gas turbine engine is also in electrical communication with the power distribution bus.

For the embodiment of FIG. 6, however, the starter-electric generator is a main electric generator, and the auxiliary power system includes an auxiliary electric generator also driven by the one or more shafts of the gas turbine engine. More particularly, for the exemplary aspect of FIG. 6 the one or more shafts the gas turbine engine include a high pressure shaft and a low pressure shaft. The main electric generator is driven by the high pressure shaft and the auxiliary electric generator is driven by the low pressure shaft. Accordingly, for the exemplary method (300) of FIG. 6, providing the determined auxiliary amount of power to the power distribution bus at (314) includes providing at (316) the determined auxiliary amount of electrical power to the power distribution bus using the auxiliary generator.

Furthermore, the exemplary method (300) includes at (318) providing power from the auxiliary generator, through the power distribution bus, through the starter-electric generator, and to the one or more shafts of the gas turbine engine (specifically to the high pressure shaft of the gas turbine engine) to add power to and drive such shaft. Notably, providing power from the auxiliary generator at (318) through the power distribution bus and starter-electric generator to the high pressure shaft may be in response to a determination that the auxiliary generator has additional electric generating capacity. Providing power from the auxiliary generator at (318) to the high pressure shaft may allow for lower idle speeds of the gas turbine engine, such as during a descent of the aircraft including the gas turbine engine, and may allow for an increased fuel efficiency of the gas turbine engine.

## Claims

1. A method (300) for operating a multi-shaft aeronautical gas turbine engine having an electrical machine, the electrical machine including a starter-electric generator driven by at least one of the shafts of the gas turbine engine, the starter-electric generator being in electrical communication with a power distribution bus, the method comprising:
determining (302) a desired amount of thrust to be produced from the gas turbine engine;
determining (304) a desired amount of electrical power to be drawn from the starter-electric generator of the gas turbine engine;
producing (306) the desired amount of thrust using the gas turbine engine;
drawing (308) less than the desired amount of electrical power from the starter-electric generator of the gas turbine engine to allow the gas turbine engine to produce the desired amount of thrust, to produce the desired amount of thrust more quickly, or to maintain a stall margin;
determining (310) a maximum amount of electrical power that may be drawn from the starter-electric generator while also producing the desired amount of thrust;
determining (312) an auxiliary amount of electrical power desired based on the determined desired amount of electrical power to be drawn and the determined maximum amount of power that that may be drawn from the starter-electric generator while also producing the desired amount of thrust;
providing (314) the determined auxiliary amount of electrical power to the power distribution bus from an auxiliary power system,
wherein the starter-electric generator of the gas turbine engine is a main starter-electric generator, and wherein the auxiliary power system includes an auxiliary electric generator driven by one or more shafts of the gas turbine engine; and
providing power from the auxiliary electric generator, through the power distribution bus, through the main starter-electric generator of the gas turbine engine, and to one or more shafts of the gas turbine engine.

2. The method (300) of claim 1, wherein determining the desired amount of electrical power to be drawn includes determining an amount of power required to fully operate an environmental controls system, and wherein drawing less than the desired amount of electrical power includes drawing less than the amount of power required to fully operate the environmental controls system.

3. The method (300) of claim 1 or 2, wherein the auxiliary power system includes an energy storage device.

4. The method (300) of claim 3, wherein providing the determined auxiliary amount of power to the power distribution bus includes providing the determined auxiliary amount of power to the power distribution bus from the energy storage device of the auxiliary power system while operating the gas turbine engine under transient engine conditions.

5. A multi-shaft aeronautical gas turbine engine (10) comprising:
a compressor section (22, 24);
a combustion section (26) located downstream of the compressor section;
a turbine section (28, 30) located downstream of the combustion section, the turbine section mechanically coupled to the compressor section by one or more shafts of the multi-shaft aeronautical gas turbine engine;
an electrical machine in mechanical communication with the one or more shafts, the electrical machine including a starter-electric generator (108) for generating electrical power, the starter-electric generator being in electrical communication with a power distribution bus (110);
an auxiliary power system (132);
**characterized in that** the gas turbine engine further comprises:
a controller (122) operably connected to the starter-electric generator (108), the controller (122) configured to:
reduce an amount of electrical power drawn from the starter-electric generator (108) to an amount below a desired amount to be drawn in order to facilitate a desired amount of thrust production by the gas turbine engine, to facilitate the desired amount of thrust production by the gas turbine engine more quickly, or to maintain a stall margin;
determine (310) a maximum amount of electrical power that may be drawn from the starter-electric generator while also producing the desired amount of thrust;
determine (312) an auxiliary amount of electrical power desired based on the determined desired amount of electrical power to be drawn and the determined maximum amount of power that that may be drawn from the starter-electric generator while also producing the desired amount of thrust;
provide (314), from the auxiliary power system, the determined auxiliary amount of electrical power to the power distribution bus, wherein the starter-electric generator of the gas turbine engine is a main starter-electric generator, and wherein the auxiliary power system includes an auxiliary electric generator driven by one or more shafts of the gas turbine engine; and
provide power from the auxiliary electric generator, through the power distribution bus, through the main starter-electric generator of the gas turbine engine, and to one or more shafts of the gas turbine engine.

## Patentansprüche

1. Verfahren (300) zum Betreiben eines Luftfahrtgasturbinentriebwerks mit mehreren Wellen, das eine elektrische Maschine aufweist, wobei die elektrische Maschine einen Anlasserelektrogenerator beinhaltet, der durch wenigstens eine der Wellen des Gasturbinentriebwerks angetrieben wird, wobei der Anlasserelektrogenerator in elektrischer Kommunikation mit einem Leistungsverteilungsbus ist, wobei das Verfahren Folgendes umfasst:
Bestimmen (302) einer gewünschten Menge an Schubkraft, die von dem Gasturbinentriebwerk erzeugt werden soll;
Bestimmen (304) einer gewünschten Menge an elektrischer Leistung, die aus dem Anlasserelektrogenerator des Gasturbinentriebwerks entnommen werden soll;
Erzeugen (306) der gewünschten Menge an Schubkraft unter Verwendung des Gasturbinentriebwerks;
Entnehmen (308) von weniger als der gewünschten Menge an elektrischer Leistung aus dem Anlasserelektrogenerator des Gasturbinentriebwerks, um zuzulassen, dass das Gasturbinentriebwerk die gewünschte Menge an Schubkraft erzeugt, um die gewünschte Menge an Schubkraft schneller zu erzeugen oder um eine Strömungsabrissgrenze zu erhalten;
Bestimmen (310) einer maximalen Menge an elektrischer Leistung, die aus dem Anlasserelektrogenerator entnommen werden kann, während ebenso die gewünschte Schubkraft erzeugt wird;
Bestimmen (312) einer gewünschten Hilfsmenge an elektrischer Leistung basierend auf der bestimmten gewünschten Menge an elektrischer Leistung, die entnommen werden soll, und der bestimmten maximalen Menge an Leistung, die aus dem Anlasserelektrogenerator entnommen werden kann, während ebenso die gewünschte Menge an Schubkraft erzeugt wird;
Bereitstellen (314) der bestimmten Hilfsmenge an elektrischer Leistung an den Leistungsverteilungsbus von einem Hilfsleistungssystem,
wobei der Anlasserelektrogenerator des Gasturbinentriebwerks ein Hauptanlasserelektrogenerator ist und wobei das Hilfsleistungssystem einen Hilfselektrogenerator beinhaltet, der durch eine oder mehrere Wellen des Gasturbinentriebwerks angetrieben wird; und
Bereitstellen von Leistung von dem Hilfselektrogenerator, durch den Leistungsverteilungsbus, durch den Hauptanlasserelektrogenerator des Gasturbinentriebwerks und an eine oder mehrere Wellen des Gasturbinentriebwerks.

2. Verfahren (300) nach Anspruch 1, wobei das Bestimmen der gewünschten Menge an elektrischer Leistung, die entnommen werden soll, das Bestimmen einer erforderlichen Menge an Leistung beinhaltet, um ein Umgebungssteuerungssystem vollständig zu betreiben, und wobei das Entnehmen von weniger als der gewünschten Menge an elektrischer Leistung das Entnehmen von weniger als der erforderlichen Menge an Leistung umfasst, um das Umgebungssteuerungssystem vollständig zu betreiben.

3. Verfahren (300) nach Anspruch 1 oder 2, wobei das Hilfsleistungssystem eine Energiespeichervorrichtung beinhaltet.

4. Verfahren (300) nach Anspruch 3, wobei das Bereitstellen der bestimmten Hilfsmenge an Leistung an den Leistungsverteilungsbus das Bereitstellen der bestimmten Hilfsmenge an Leistung an den Leistungsverteilungsbus von der Energiespeichervorrichtung des Hilfsleistungssystems während des Betreibens des Gasturbinentriebwerks unter Triebwerkübergangsbedingungen beinhaltet.

5. Luftfahrtgasturbinentriebwerk (10) mit mehreren Wellen, das Folgendes umfasst:
einen Verdichterabschnitt (22, 24);
einen Verbrennungsabschnitt (26), der sich stromabwärts des Verdichterabschnitts befindet;
einen Turbinenabschnitt (28, 30), der sich stromabwärts des Verbrennungsabschnitts befindet, wobei der Turbinenabschnitt durch eine oder mehrere Wellen des Luftfahrtgasturbinentriebwerks mit mehreren Wellen mit dem Verdichterabschnitt mechanisch gekoppelt ist;
eine elektrische Maschine in mechanischer Kommunikation mit der einen oder den mehreren Wellen, wobei die elektrische Maschine einen Anlasserelektrogenerator (108) zum Generieren von elektrischer Leistung beinhaltet, wobei der Anlasserelektrogenerator in elektrischer Kommunikation mit einem Leistungsverteilungsbus (110) steht;
ein Hilfsleistungssystem (132);
**dadurch gekennzeichnet, dass** das Gasturbinentriebwerk ferner Folgendes umfasst:
eine Steuervorrichtung (122), die mit dem Anlasserelektrogenerator (108) wirkverbunden ist, wobei die Steuervorrichtung (122) für Folgendes konfiguriert ist:
Reduzieren einer Menge an elektrischer Leistung, die aus dem Anlasserelektrogenerator (108) entnommen wird, auf eine Menge unterhalb einer gewünschten Menge, die entnommen werden soll, um eine gewünschte Menge an Schubkrafterzeugung durch das Gasturbinentriebwerk zu ermöglichen, um die gewünschte Menge an Schubkrafterzeugung durch das Gasturbinentriebwerk schneller zu ermöglichen oder um eine Strömungsabrissgrenze zu erhalten;
Bestimmen (310) einer maximalen Menge an elektrischer Leistung, die aus dem Anlasserelektrogenerator entnommen werden kann, während ebenso die gewünschte Menge an Schubkraft erzeugt wird;
Bestimmen (312) einer gewünschten Hilfsmenge an elektrischer Leistung basierend auf der bestimmten gewünschten Menge an elektrischer Leistung, die entnommen werden soll, und der bestimmten maximalen Menge an Leistung, die aus dem Anlasserelektrogenerator entnommen werden kann, während ebenso die gewünschte Menge an Schubkraft erzeugt wird;
Bereitstellen (314), von dem Hilfsleistungssystem, der bestimmten Hilfsmenge an elektrischer Leistung an den Leistungsverteilungsbus, wobei der Anlasserelektrogenerator des Gasturbinentriebwerks ein Hauptanlasserelektrogenerator ist und wobei das Hilfsleistungssystem einen Hilfselektrogenerator beinhaltet, der durch eine oder mehrere Wellen des Gasturbinentriebwerks angetrieben wird; und
Bereitstellen von Leistung von dem Hilfselektrogenerator, durch den Leistungsverteilungsbus, durch den Hauptanlasserelektrogenerator des Gasturbinentriebwerks und an eine oder mehrere Wellen des Gasturbinentriebwerks.

## Revendications

1. Procédé (300) de fonctionnement d'un moteur à turbine à gaz aéronautique multi-arbres ayant une machine électrique, la machine électrique comportant un démarreur-générateur électrique entrainé par au moins un des arbres du moteur à turbine à gaz, le démarreur-générateur électrique étant en communication électrique avec un bus de distribution de puissance, le procédé comprenant :
la détermination (302) d'une quantité de poussée souhaitée à produire à partir du moteur à turbine à gaz ;
la détermination (304) d'une quantité souhaitée de puissance électrique à prélever à partir du démarreur-générateur électrique du moteur à turbine à gaz ;
la production (306) de la quantité de poussée souhaitée à l'aide du moteur à turbine à gaz ;
le prélèvement (308) d'une quantité inférieure à la quantité souhaitée de puissance électrique à partir du démarreur-générateur électrique du moteur à turbine à gaz pour permettre au moteur à turbine à gaz de produire la quantité de poussée souhaitée, de produire la quantité de poussée souhaitée plus rapidement ou de maintenir une marge de décrochage ;
la détermination (310) d'une quantité maximale de puissance électrique qui peut être prélevée à partir du démarreur-générateur électrique tout en produisant également la quantité de poussée souhaitée ;
la détermination (312) d'une quantité auxiliaire de puissance électrique souhaitée sur la base de la quantité de puissance électrique souhaitée déterminée à prélever et de la quantité maximale déterminée de puissance pouvant être prélevée à partir du démarreur-générateur électrique tout en produisant également la quantité de poussée souhaitée ;
la fourniture (314) de la quantité auxiliaire déterminée de puissance électrique au bus de distribution de puissance à partir d'un système de puissance auxiliaire,
le démarreur-générateur électrique du moteur à turbine à gaz étant un démarreur-générateur électrique principal, et le système de puissance auxiliaire comportant un générateur électrique auxiliaire entraîné par un ou plusieurs arbres du moteur à turbine à gaz ; et
la fourniture de la puissance à partir du générateur électrique auxiliaire, par l'intermédiaire du bus de distribution de puissance, par l'intermédiaire du démarreur-générateur électrique principal du moteur à turbine à gaz et à un ou plusieurs arbres du moteur à turbine à gaz.

2. Procédé (300) selon la revendication 1, dans lequel la détermination de la quantité souhaitée de puissance électrique à prélever comporte la détermination d'une quantité de puissance requise pour faire fonctionner pleinement un système de commande environnemental, et le prélèvement d'une quantité inférieure à la quantité souhaitée de puissance électrique comportant le prélèvement d'une quantité inférieure à la quantité de puissance nécessaire pour faire fonctionner pleinement le système de commande environnemental.

3. Procédé (300) selon la revendication 1 ou 2, dans lequel le système de puissance auxiliaire comporte un dispositif de stockage d'énergie.

4. Procédé (300) selon la revendication 3, dans lequel la fourniture de la quantité auxiliaire déterminée de puissance au bus de distribution de puissance comporte la fourniture de la quantité auxiliaire déterminée de puissance au bus de distribution de puissance à partir du dispositif de stockage d'énergie du système de puissance auxiliaire tout en faisant fonctionner le moteur à turbine à gaz dans des conditions moteur transitoires.

5. Moteur à turbine à gaz aéronautique multi-arbres (10), comprenant :
une section de compresseur (22, 24) ;
une section de combustion (26) située en aval de la section de compresseur ;
une section de turbine (28, 30) située en aval de la section de combustion, la section de turbine étant accouplée mécaniquement à la section de compresseur par un ou plusieurs arbres du moteur à turbine à gaz aéronautique multi-arbres ;
une machine électrique en communication mécanique avec le ou les arbres, la machine électrique comportant un démarreur-générateur électrique (108) pour générer de la puissance électrique, le démarreur-générateur électrique étant en communication électrique avec un bus de distribution de puissance (110) ;
un système de puissance auxiliaire (132) ;
**caractérisé en ce que** le moteur à turbine à gaz comprend en outre :
un dispositif de commande (122) connecté de manière fonctionnelle au démarreur-générateur électrique (108), le dispostif de commande (122) étant configuré pour :
réduire une quantité de puissance électrique prélevée à partir du démarreur-générateur électrique (108) à une quantité en dessous d'une quantité désirée à prélever pour faciliter une quantité désirée de production de poussée par le moteur à turbine à gaz, pour faciliter la quantité désirée de production de poussée par le moteur à turbine à gaz plus rapidement ou pour maintenir une marge de décrochage ;
déterminer (310) une quantité maximale de puissance électrique qui peut être prélevée à partir du démarreur-générateur électrique tout en produisant également la quantité de poussée souhaitée ;
déterminer (312) une quantité auxiliaire de puissance électrique souhaitée sur la base de la quantité de puissance électrique souhaitée déterminée à prélever et de la quantité maximale déterminée de puissance pouvant être prélevée à partir du démarreur-générateur électrique tout en produisant également la quantité souhaitée de poussée ;
fournir (314), à partir du système de puissance auxiliaire, la quantité auxiliaire déterminée de puissance électrique au bus de distribution de puissance, le démarreur-générateur électrique du moteur à turbine à gaz étant un démarreur-générateur électrique principal, et le système de puissance auxiliaire comportant un générateur électrique auxiliaire entraîné par un ou plusieurs arbres du moteur à turbine à gaz ; et
fournir de la puissance à partir du générateur électrique auxiliaire, par l'intermédiaire du bus de distribution de puissance, par l'intermédiaire du démarreur-générateur électrique principal du moteur à turbine à gaz et à un ou plusieurs arbres du moteur à turbine à gaz.
